Europäisches Patentamt

European Patent Office

Office européen des brevets

(19)

(11) **EP 0 943 134 B1**

(12) **FASCICULE DE BREVET EUROPEEN**

(45) Date de publication et mention
de la délivrance du brevet:
**21.11.2001 Bulletin 2001/47**

(21) Numéro de dépôt: **97913257.8**

(22) Date de dépôt: **04.11.1997**

(51) Int Cl.⁷: $G07F\ 7/08$, $G07F\ 17/32$

(86) Numéro de dépôt international:
**PCT/FR97/01985**

(87) Numéro de publication internationale:
**WO 98/20465 (14.05.1998 Gazette 1998/19)**

(54) **SYSTEME DE GESTION DES TRANSFERTS D'UNITES DE VALEUR**

SYSTEM ZUM VERWALTEN DER ÜBERTRAGUNG VON REGISTRIERTEN WERTEINHEITEN

SYSTEM FOR MANAGING THE TRANSFER OF UNITS OF RECORDED VALUE

(84) Etats contractants désignés:
**AT BE CH DE DK ES FI FR GB GR IE IT LI LU MC
NL PT SE**

(30) Priorité: **04.11.1996 FR 9613412**

(43) Date de publication de la demande:
**22.09.1999 Bulletin 1999/38**

(73) Titulaire: **GEMPLUS
13881 Gémenos Cédex (FR)**

(72) Inventeurs:
• **FOGLINO, Jean-Jacques
F-13790 Peynier (FR)**
• **NICOLAI, Alain
F-13190 Allauch (FR)**

(56) Documents cités:
**EP-A- 0 360 613      EP-A- 0 666 549
EP-A- 0 668 579      WO-A-96/07164
GB-A- 2 296 361**

**Description**

La présente invention se rapporte à un système de gestion des transferts d'unités de valeur entre d'une part une pluralité de cartes à puce et d'autre part une pluralité de machines munies d'un lecteur-validateur de cartes à puce.

Elle s'applique à tout système de gestion des transferts d'unités de valeur dans lesquels les cartes à puce contiennent des informations représentatives desdites unités de valeur et dans lesquels les machines sont équipées d'un lecteur-validateur apte à débiter ou à créditer des unités de valeur sur ces cartes à chaque transaction opérée.

L'invention s'applique particulièrement à un système de jeu dans lequel les machines sont des machines de jeu, les cartes sont des cartes de jeu, les unités de valeur sont des unités de jeu, les transactions sont des parties jouées, les débits sont le résultat des parties perdues et les crédits sont les résultats des partie gagnées.

Le document WO-A-9607164 sur lequel est basé le préambule de la revendication 1 décrit un système de gestion des transferts d'unités de valeur.

La présente invention permet de résoudre le problème consistant à gérer un transfert d'unités de valeur correspondant à une transaction qui n'est pas de même type que celles prévues pour l'application.

A cette fin, l'invention propose un système de gestion (S) des transferts d'unités de valeur entre d'une part une pluralité de cartes à puce stockant des informations représentatives desdites unités de valeur, et d'autre part une pluralité de machines, chaque machine étant pourvue d'un programme d'application et d'au moins un lecteur-validateur apte à débiter des unités de valeur des cartes à puce ou à créditer des unités de valeur sur ces cartes suivant ce programme d'application, le système de gestion étant principalement caractérisé en ce qu'il comporte des moyens de paiement d'une prestation et en ce que ces moyens sont formés par des moyens de commande et de stockage d'une information représentative de cette prestation.

Selon une première caractéristique les moyens de commande et de stockage de ladite information sont placés dans la carte et dans la machine ou dans la carte ou dans la machine.

Dans le cas où les moyens de commande et de stockage de ladite information sont placés dans la carte et dans la machine, les moyens de stockage comprennent d'une part la mémoire contenant les unités de valeur et d'autre part la mémoire contenant le programme d'application de la machine.

Les moyens de commande sont aptes à piloter le lecteur-validateur pour obtenir de la lecture de la carte une donnée significative d'un état logique de la carte, et utiliser cet état pour déclencher ou ne pas déclencher un débit d'unités de valeur correspondant au paiement de la prestation.

Selon une variante, la donnée est pré-enregistrée dans la carte et mise à jour par le lecteur-validateur lorsque le débit d'unités a eu lieu.

Selon une autre variante, la donnée est déduite à partir du nombre de transactions opérées par la carte.

Dans le cas où les moyens de commande et de stockage de ladite information sont placés dans la carte, ces moyens comprennent la mémoire contenant les unités de valeur.

Alors l'information représentative de la prestation est donnée par le nombre d'unités de valeur stockées sur la carte.

Dans le cas où les moyens de commande et de stockage de ladite information sont placés dans la machine, ces moyens comprennent la mémoire contenant le programme d'application de la machine.

Alors l'information représentative de la prestation est donnée par un paramètre du programme d'application de la machine.

L'invention s'applique à un système de jeu, dans lequel les unités de valeur sont des unités de jeu, les cartes à puce sont des cartes de jeu, les machines sont des machines de jeu d'un système de jeu, les transactions sont des transactions de jeu, le programme d'application est un programme de jeu, les valeurs débitées ou créditées pendant les transactions sont constituées par des gains ou des pertes.

Dans ce cas, le paramètre du programme d'application correspond au taux de redistribution des gains.

D'autres particularités et avantages de l'invention apparaîtront à la lecture de la description détaillée faite ci-dessous donnée à titre d'exemple non limitatif et en regard des figures sur lesquelles :

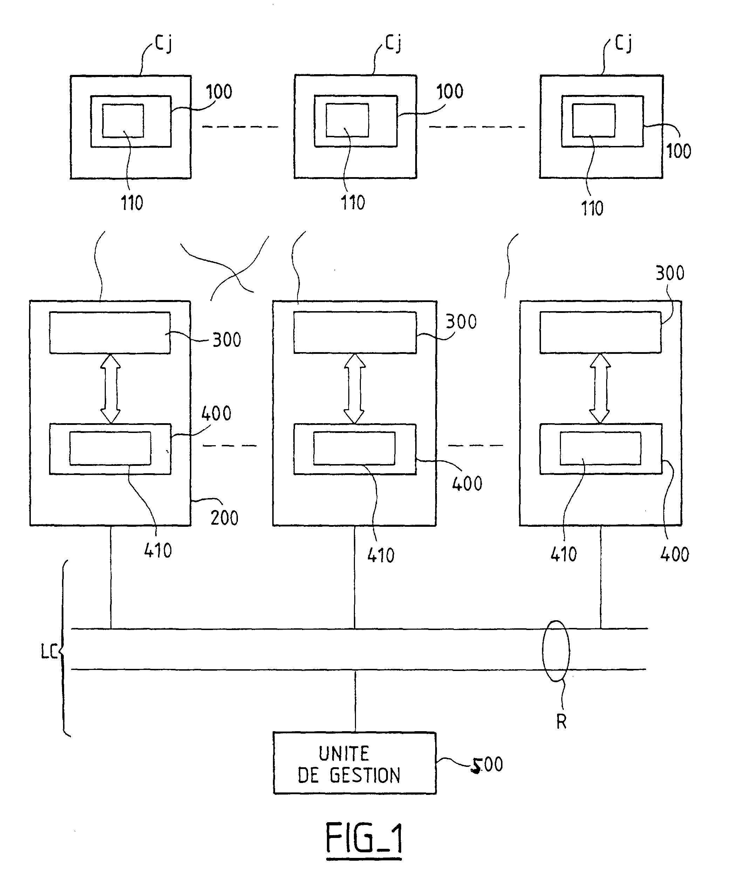

- la figure 1, représente un schéma général d'un système de gestion des transferts selon l'invention,
- la figure 2, représente le plan mémoire d'une carte à puce,
- la figure 3, représente le schéma général de l'électronique d'une machine du système.

Le système selon l'invention comporte une pluralité de machine 200 destinées à être placées en libre service dans un environnement contrôlé ou non contrôlé.

Chaque machine est équipée d'un lecteur-validateur 300 apte à lire les informations contenues dans les cartes et à les communiquer à l'unité de commande 400 de la machine.

De manière connue, chaque machine 200 pourra être reliée à une unité centrale de gestion 500 au moyen d'une liaison de communication LC comprenant un réseau de communication R, une interface électronique de connexion entre chaque lecteur-validateur et le réseau de communication et une interface électronique de connexion entre le réseau de communication et l'unité centrale de gestion. L'interface de connexion est formée par un circuit modulateur-démodulateur (non représenté).

Chaque machine pourra être un ordinateur personnel associé à un programme d'application pour opérer selon la transaction à une opération de débit ou de crédit sur la carte.

Ces machines pourront être constituées par un ordinateur personnel associé ou un logiciel résident (exécuté par l'ordinateur) ou par un terminal local relié par un réseau à un processeur distant qui exécute le logiciel.

Dans le cas de l'application de l'invention à un système de machines de jeu, les machines pourront être un ordinateur personnel associé à un logiciel de jeu ou une machine de jeu virtuelle constituée par un terminal local ou une machine de jeu placée dans un environnement contrôlé ( un casino par exemple).

Les cartes CJ à circuit intégré 100 sont des cartes comprenant une mémoire programmable électriquement 110 associée à des circuits de décodage d'adresses et de données, l'ensemble formant le circuit 100.

Les cartes de jeu CJ et les lecteurs-validateurs sont à fonctionnement sans contact ou avec contact.

Comme cela est décrit dans la suite, la mémoire peut comprendre également dans une autre zone une donnée D dont l'état logique donne une indication sur le nombre d'utilisation de la carte.

Les cartes de jeu CJ sont préchargées en unités de jeu à partir de l'unité centrale de gestion à accès contrôlé.

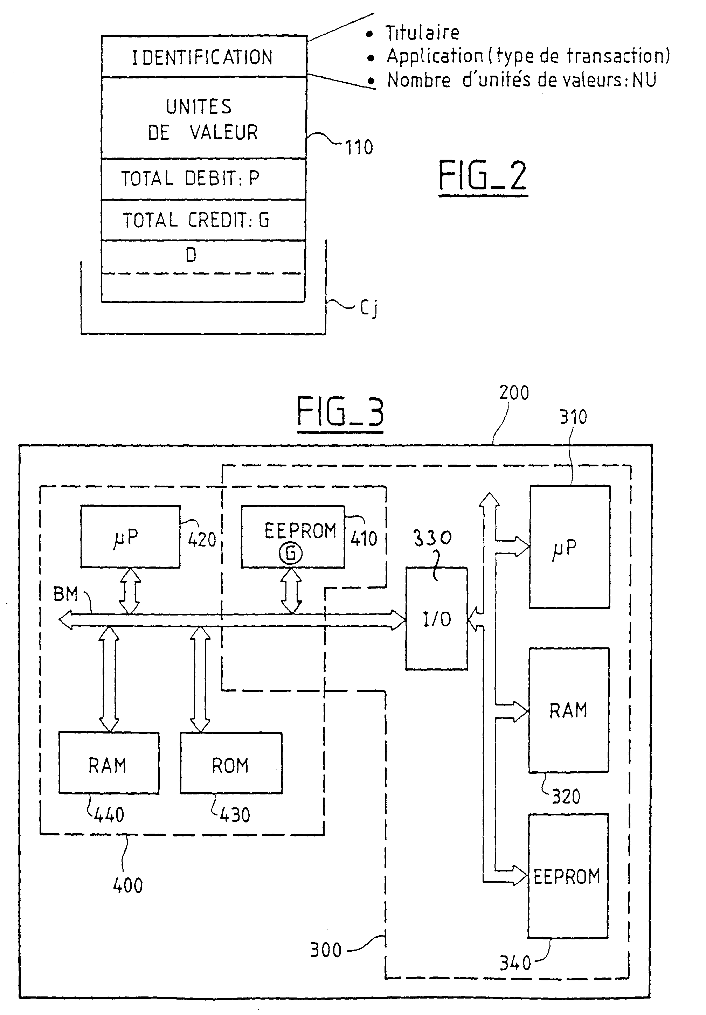

On a représenté à la figure 2 un emple de plan mémoire d'une carte pré-enregistrée.

Ce plan comprend une zone d'identification comprenant des informations telles que l'identification du titulaire, ainsi qu'une zone définissant l'application par le type de transaction (parties jouées, ou communications téléphoniques). Cette zone pourra également comporter le nombre d'unités de valeur NU chargées initialement. Ce plan mémoire comprend en outre une zone de stockage des unités de valeurs uniquement accessible par une machine du système. L'accès à cette zone est protégé par un dispositif de sécurité de type connu (dispositif utilisant un algorithme à clé secrète).

Une zone comporte une information P mise à jour par la machine à chaque transaction représentant le total des débits (des pertes de jeu).

Une autre zone comporte une information G mise à jour par la machine à chaque transaction représentant le total des crédits (des gains au jeu).

Comme cela est décrit dans la suite, la mémoire peut comporter également dans une autre zone une donné D dont l'état logique donne une indication sur le nombre d'utilisations de la carte.

Le schéma de la figure 3 illustre le lecteur-validateur 300 de la machine et l'électronique de pilotage de cette machine. Le lecteur-validateur 300 comporte une unité de traitement et de stockage de données comprenant un processeur 310 et des mémoires associées ; mémoires de programme 430, 410 (ROM, EEPROM) et mémoire volatile de travail (RAM) 320. Le lecteur comporte également un bus d'adresse et de commande et de données BL qui le relie à ces mémoires.

Selon une réalisation particulière la mémoire de programme 410 peut être commune à l'électronique de commande 400 de la machine et à celle du lecteur.

On peut prévoir également sur certaines machines que les circuits du lecteur soient partie intégrante de l'électronique de la machine.

Dans le cas représenté, le lecteur-validateur 300 communique avec le circuit de commande de la machine à travers une interface d'entrée-sortie 330.

Selon un premier mode de réalisation de l'invention, les moyens de paiement d'une prestation sont placés dans la carte. Ces moyens sont alors formés par la mémoire de stockage des unités de valeur.

L'information représentative de la prestation est donnée par le nombre NU d'unités de valeur pré-enregistrées sur la carte.

Selon un deuxième mode de réalisation de l'invention, les moyens de paiement d'une prestation sont placés dans la machine. Ces moyens sont alors formés par la mémoire de programme 410 contenant le logiciel de jeu dans un système de machines de jeu (ou du logiciel de comptage d'unités téléphoniques dans le cas d'un système de terminaux téléphoniques).

L'information représentative de la prestation est donnée par le paramètre enregistré dans le programme de fonctionnement pilotant les demandes de transaction.

Dans le cas d'un système de machines de jeu, ce paramètre est le taux de restitution des gains.

Selon un troisième mode de réalisation de l'invention, les moyens de paiement sont distribués dans la carte et dans la machine. Dans la carte ces moyens sont formés par la mémoire 110 et dans la machine, ces moyens sont formés par l'unité de traitement 420 et la mémoire de programme 410.

Selon une première variante d'exécution une donnée D est enregistrée par le lecteur-validateur pour indiquer que la transaction de type différent a eu lieu ou non.

Le programme PG comporte des données d'instruction pour la lecture de cette donnée la commande de débit d'un nombre d'unités de valeur prédéterminé dans la carte en fonction de l'état logique de cette donnée.

Selon une deuxième variante d'exécution, le programme PG comporte des données d'instruction pour la lecture de la donnée P représentative du total débit et de la donnée G représentative du total des crédits, et de la donnée représentative du nombre d'unités de valeur pré-enregistrées NU. Ce programme comporte en outre des données d'instruction pour le calcul de la relation suivante :

$$NU-P+G = R$$

où R est la donnée représentative du nombre d'unités de valeur restantes.

Le programme comporte également des données d'instruction de commande de débit d'un nombre d'unités de valeur prédéterminé en fonction du résultat.

## Revendications

1. Système de gestion (S) des transferts d'unités de valeur entre d'une part une pluralité de cartes à puce (CJ) stockant des informations représentatives desdites unités de valeur, et d'autre part une pluralité de machines (200), chaque machine étant pourvue d'un programme d'application et d'au moins un lecteur-validateur (300) apte à débiter des unités de valeur des cartes à puce (CJ) ou à créditer des unités de valeur sur ces cartes suivant ce programme d'application, le système de gestion (S) comportant des moyens de paiement d'une prestation et, étant **caractérisé en ce que** ces moyens sont formés par des moyens de commande et de stockage (100,400) d'une information représentative de cette prestation.

2. Système de gestion selon la revendication 1, **caractérisé en ce que** les moyens de commande et de stockage (100,400) de ladite information sont placés dans la carte et dans la machine ou dans la carte ou dans la machine.

3. Système de gestion selon l'une quelconque des revendications précédentes, **caractérisé en ce que**, dans le cas où les moyens ce commande et de stockage (100,400) de ladite information sont placés dans la carte et dans la machine, les moyens de stockage comprennent d'une part la mémoire (110) contenant les unités de valeur et d'autre part la mémoire (410) contenant le programme d'application de la machine.

4. Système de gestion selon la revendication 3, **caractérisé en ce que** les moyens de commande (400) sont aptes à piloter le lecteur-validateur pour obtenir de la lecture de la carte, une donnée significative d'un état logique de la carte, et utiliser cet état pour déclencher ou ne pas déclencher un débit d'unités de valeur correspondant au paiement de la prestation.

5. Système selon la revendication 4, **caractérisé en ce que** la donnée est pré-enregistrée dans la carte et mise à jour par le lecteur-validateur lorsque le débit d'unités a eu lieu.

6. Système selon la revendications 4, **caractérisé en ce que** la donnée est déduite à partir du nombre de transactions opérées par la carte.

7. Système selon les revendications 1 ou 2, **caractérisé en ce que** dans le cas où les moyens de commande et de stockage de ladite information sont placés dans la carte, ces moyens comprennent la mémoire contenant les unités de valeur.

8. Système de gestion selon la revendication 7, **caractérisé en ce que** l'information représentative de la prestation est donnée par le nombre d'unités de valeur stockées sur la carte.

9. Système selon les revendications 1 ou 2, **caractérisé en ce que** dans le cas où les moyens de commande et de stockage de ladite information sont placés dans la machine, ces moyens comprennent la mémoire contenant le programme d'application de la machine.

10. Système de gestion selon la revendication 9, **caractérisé en ce que** l'information représentative de la prestation est donnée par un paramètre du programme d'application de la machine.

11. Système de gestion selon l'une quelconque des revendications, **caractérisé en ce que** les unités de valeur sont des unités de jeu, les cartes à puce (CJ) sont des cartes de jeu, les machines (200) sont des machines de jeu d'un système de jeu (S), les transactions sont des transactions de jeu, le programme d'application est un programme de jeu, les valeurs débitées ou créditées pendant les transactions sont constituées par des gains ou des pertes.

12. Système de gestion selon la revendications 9 ou 10, **caractérisé en ce que** le paramètre du programme d'application correspond au taux de redistribution des gains.

## Patentansprüche

1. Verwaltungssystem (S) des Transfers von Werteinheiten zwischen einerseits einer Vielzahl von Chipkarten (CJ), auf denen für die besagten Werteinheiten repräsentative Informationen gespeichert sind, und andererseits einer Vielzahl von Maschinen (200), wobei jede Maschine mit einem Applikationsprogramm und mindestens einem Lese-/Bestätigungsgerät (300) ausgestattet ist, das gemäss diesem Applikationsprogramm Werteinheiten von den Chipkarten (CJ) abbuchen oder Werteinheiten auf diesen Karten gutschreiben kann, wobei das Verwaltungssystem (S) Zahlungsmittel einer Dienstleistung umfasst und

**dadurch gekennzeichnet ist, dass** diese Mittel aus Steuer- und Speichermitteln (100, 400) einer für diese Dienstleistung repräsentativen Information bestehen.

2. Verwaltungssystem nach Anspruch 1, **dadurch gekennzeichnet, dass** die Steuer- und Speichermittel (100, 400) der besagten Information in der Karte und in der Maschine bzw. in der Karte oder der Maschine angeordnet sind.

3. Verwaltungssystem nach einem der vorangehenden Ansprüche, **dadurch gekennzeichnet, dass** wenn die Steuer- und Speichermittel (100, 400) der besagten Information in der Karte und in der Maschine angeordnet sind, die Speichermittel einerseits den die Werteinheiten enthaltenden Speicher (110) und andererseits den das Applikationsprogramm der Maschine enthaltenden Speicher (410) umfassen.

4. Verwaltungssystem nach Anspruch 3, **dadurch gekennzeichnet, dass** die Steuermittel (400) das Lese-/Bestätigungsgerät steuern können, um durch das Lesen der Karte eine signifikante Angabe eines logischen Zustands der Karte zu erhalten, und diesen Zustand benutzen können, um eine Abbuchung von der Bezahlung der Dienstleistung entsprechenden Werteinheiten auszulösen oder nicht.

5. System nach Anspruch 4, **dadurch gekennzeichnet, dass** die Angabe in der Karte vorher gespeichert und vom Lese-/Bestätigungsgerät aktualisiert wird, wenn die Abbuchung der Einheiten stattfindet.

6. System nach Anspruch 4, **dadurch gekennzeichnet, dass** die Angabe von der Anzahl der mit der Karte durchgeführten Transaktionen abgeleitet wird.

7. System nach den Ansprüchen 1 oder 2, **dadurch gekennzeichnet, dass** wenn die Steuer- und Speichermittel der besagten Information in der Karte angeordnet sind, diese Mittel den die Werteinheiten enthaltenden Speicher umfassen.

8. Verwaltungssystem nach Anspruch 7, **dadurch gekennzeichnet, dass** die für die Dienstleistung repräsentative Information von der Anzahl der auf der Karte gespeicherten Werteinheiten vorgegeben wird.

9. System nach den Ansprüchen 1 und 2, **dadurch gekennzeichnet, dass** wenn die Steuer- und Speichermittel der besagten Information in der Maschine angeordnet sind, diese Mittel den das Applikationsprogramm der Maschine enthaltenden Speicher umfassen.

10. Verwaltungssystem nach Anspruch 9, **dadurch gekennzeichnet, dass** die für die Dienstleistung repräsentative Information von einem Parameter des Applikationsprogramms der Maschine vorgegeben wird.

11. Verwaltungssystem nach einem der Ansprüche, **dadurch gekennzeichnet, dass** die Werteinheiten Spieleinheiten sind, die Chipkarten (CJ) Spielkarten sind, die Maschinen (200) Spielmaschinen eines Spielsystems (S) sind, die Transaktionen Spieltransaktionen sind, das Applikationsprogramm ein Spielprogramm ist, die während der Transaktionen abgebuchten oder gutgeschriebenen Werte aus Gewinnen oder Verlusten bestehen.

12. Verwaltungssystem nach Anspruch 9 oder 10, **dadurch gekennzeichnet, dass** der Parameter des Applikationsprogramms der Wiederverteilungsrate der Gewinne entspricht.

**Claims**

1. A system (S) for managing transfers of units of value between on the one hand a plurality of smart cards (CJ) storing information representing the said units of value, and on the other hand a plurality of machines (200), each machine being provided with an application program and at least one reader-validator (300) able to debit units of value from the smart cards (CJ) or to credit units of value to these cards in accordance with this application program, the management system (S) having means for paying for a service, and **characterised in that** these means are formed by control means (100, 400) storing information representing this service.

2. A management system according to Claim 1, **characterised in that** the control means (100, 400) for storing the said information are placed in the card and in the machine or in the card or in the machine.

3. A management system according to any one of the preceding claims, **characterised in that**, where the control means (100, 400) for storing the said information are placed in the card and in the machine, the storage means comprise on the one hand the memory (110) containing the units of value and on the other hand the memory (410) containing the application program of the machine.

4. A management system according to Claim 3, **characterised in that** the control means (400) are able to control the reader-validator in order to obtain, from a reading of the card, a data item signifying a logic state of the card, to use this state to trigger or not to trigger a flow of units of value corresponding to the payment for the service.

**5.** A system according to Claim 4, **characterised in that** the data item is pre-recorded in the card and updated by the reader-validator when the flow of units has taken place.

**6.** A system according to Claim 4, **characterised in that** the data item is derived from the number of transactions made by the card.

**7.** A system according to Claims 1 or 2, **characterised in that**, where the control means storing the said information are placed in the card, these means comprise the memory containing the units of value.

**8.** A management system according to Claim 7, **characterised in that** the information representing the service is given by the number of units of value stored on the card.

**9.** A system according to Claims 1 or 2, **characterised in that**, where the control means storing the said information are placed in the machine, these means comprise the memory containing the application program of the machine.

**10.** A management system according to Claim 9, **characterised in that** the information representing the service is given by a parameter of the application program of the machine.

**11.** A management system according to any one of the claims, **characterised in that** the units of value are gaming units, the smart cards (CJ) are gaming cards, the machines (200) are gaming machines in a gaming system (S), the transactions are gaming transactions, the application program is a gaming program, and the values debited or credited during the transactions consist of winnings or losses.

**12.** A management system according to Claim 9 or 10, **characterised in that** the parameter of the application program corresponds to the rate of redistribution of the winnings.

## FIG_1

IDENTIFICATION

UNITES
DE VALEUR

TOTAL DEBIT: P

TOTAL CREDIT: G

D

~110

~Cj

• Titulaire
• Application (type de transaction)
• Nombre d'unités de valeurs: NU

# FIG_2

# FIG_3

200

310

µP — 420

EEPROM — 410
Ⓖ

330

µP

BM

I/O

RAM — 440

ROM — 430

RAM

320

400

EEPROM

300

340